(19)

Europäisches
Patentamt
European
Patent Office
Office européen
des brevets

(11)     EP 2 139 121 A1

(12)     EUROPEAN PATENT APPLICATION

(43) Date of publication:
    30.12.2009  Bulletin 2009/53

(51) Int Cl.:
    *H04B 1/04* (2006.01)

(21) Application number: 08158910.3

(22) Date of filing: 24.06.2008

(84) Designated Contracting States:
    AT BE BG CH CY CZ DE DK EE ES FI FR GB GR
    HR HU IE IS IT LI LT LU LV MC MT NL NO PL PT
    RO SE SI SK TR
    Designated Extension States:
    AL BA MK RS

(71) Applicant: Alcatel-Lucent Deutschland AG
    70435 Stuttgart (DE)

(72) Inventors:
    • Fischer, Georg
      90425, Nuremberg (DE)
    • Hoefle, Matthias
      90469, Nuremberg (DE)

(74) Representative: Urlichs, Stefan
    Alcatel Lucent
    Intellectual Property & Standards
    70430 Stuttgart (DE)

(54)     **A method for signal transmission and reception, a transmitter, a radio frequency system, a base station, a mobile station and a communication network therefor**

(57)     The invention concerns a method for signal transmission and reception using a transmitter (TX) comprising a delta sigma modulator (DSM) with a noise shaping filter (F2) and a power amplifier (AMP), said transmitter (TX) being connected to a receiver (RX), whereby an asymmetric noise shaping is performed in the noise shaping filter (F2) with the noise in a first frequency band used for reception being lower than in a second frequency band used for transmission, a transmitter, a radio frequency system, a base station, a mobile station, and a communication network therefor.

Fig. 8

**Description**

The invention relates to a method for signal transmission and reception according to the preamble of claim 1, a transmitter according to the preamble of claim 2, a radio frequency system according to the preamble of claim 4, a base station according to the preamble of claim 7, a mobile station according to the preamble of claim 8, and a communication network according to the preamble of claim 9.

Mobile communication systems like e.g. Universal Mobile Telecommunications System (UMTS) or Third Generation Partnership Project Long Term Evolution (3GPP LTE) require power amplifiers with high output power at frequencies up to 2.6 GHz.

Using conventional so-called A/AB or C class amplifiers, Lateral Diffused Metal Oxide Silicon (LDMOS) transistor technology meets said requirements of modern radio frequency (RF) power amplifiers.

Another requirement for RF power amplifiers requests an impedance of 50 Ohm at the input and the output of the power amplifier in the targeted frequency band. As the input and output impedance of LDMOS power transistors is very low, matching circuits at the input and the output of the transistor are required to transform the transistors input and output impedance to the required input and output impedance of 50 Ohm.

Unfortunately, efficient matching structures are bound to specific frequency ranges. Due to the very low impedance of LDMOS power transistors, the supportable frequency range of efficient matching circuits is very small. However, modern power amplifiers need to support a wide range of carrier frequencies, thus, the matching structures for LDMOS power transistors would need to be reconfigurable to support the required range of carrier frequencies.

An alternative to LDMOS transistors are power amplifiers based on galliumnitride (GaN) technology. The input and output impedance of GaN power transistors is inherently much larger than the impedance of LDMOS transistors. Thus, the supportable frequency range of particular matching circuits is also much larger and a reconfiguration of the matching structures may not be needed. The higher impedance levels are a consequence of the fact that GaN transistors allow for higher operational voltages, which in turn implies lower currents for the same wanted output power.

The most important disadvantage of conventional A/AB or C class amplifiers is the low power efficiency. Due to the low power efficiency of the power amplifier, the energy consumption of the base stations is very high and causes high operation expenditures for the operators.

In the communication industry there is always a pressure to reduce costs, especially operation expenditures (OPEX) to be competitive. Therefore the industry is permanently searching for possibilities to reduce the cost of the goods sold. One means to reduce the costs is to increase the efficiency of the analogue hardware by changing the RF power amplifier architecture.

As an alternative to the currently used operation mode of e.g. class A/AB or C amplifiers, a new architecture may use so-called class D/E/F/S amplifiers to improve the power efficiency. This new approach inherently leads to higher efficiency of the power amplifier of theoretically 100% and by means of the digital approach reduces analog imperfections and liability.

In said D/E/F/S class switch mode RF power amplifiers, the transistor is not amplifying the input signal linearly, but is acting as a switch in the ideal case. As an ideal switch does not dissipate power, a theoretical power efficiency of 100% could be reachable.

In the US patent application US 11/327,838, the use of a class S RF power amplifier system comprising a delta sigma modulator and a switch mode power amplifier in a radio frequency transmitter is described.

Switch mode RF power amplifiers are known to have high potential for highest efficiency with UMTS, WIMAX (WIMAX = Worldwide Interoperability for Microwave Access) and LTE modulation formats with large crest factor, i.e. peak to average power ratio.

However, the improvement in efficiency compared to other amplifier architectures comes at the cost of increased transmitter noise generated by the amplifier. The problem now is that the transmitter's noise may also be present around receive frequencies. This means that a duplexer in a base station needs a high rejection in its transmission part to avoid that noise from the transmitter leaks into the receiver and desensitizes it.

According to prior art, in order to reduce the transmitter's noise around receive frequencies especially if high order delta sigma modulators are used, a noise notch resulting from a noise shaping filter can be made wider instead of deeper. By that the receive band already falls into the wide noise notch.

However, the noise around receive frequencies still remains high and causes a risk for desensitization of the receiver.

The object of the invention is thus to propose a method for signal transmission using switch mode amplifiers with reduced noise around receive frequencies compared to the state of the art.

This object is achieved by a method according to the teaching of claim 1, a transmitter according to the teaching of claim 2, a radio frequency system according to the teaching of claim 4, a base station according to the teaching of claim 7, a mobile station according to the teaching of claim 8, and a communication network according to the teaching of claim 9.

When considering noise in an RF system, it can be concluded that noise around receive frequencies is much more problematic than noise around transmit frequencies. Noise around receive frequencies is problematic as it can desensitize the receiver and by that could reduce the cell radius. Noise around transmit frequencies can be much higher, as when looking at typical air interface standards, e.g. for UMTS, the standard allows for significant noise.

Thus, the main idea of the invention is to go for an asymmetric noise shaping of a transmitter noise by means of a noise shaping filter where the noise around receive frequencies is much lower than the noise around transmit frequencies.

Further developments of the invention can be gathered from the dependent claims and the following description.

In the following the invention will be explained further making reference to the attached drawings.

Fig. 1 schematically shows a radio frequency system according to the state of the art with a transmitter and a receiver that are connected to an antenna via a duplexer.

Fig. 2 schematically shows a transmitter according to the state of the art with a delta sigma modulator, an amplifier and a filter.

Fig. 3 schematically shows a delta sigma modulator with a noise shaping filter and diagrams showing a signal transfer function and a noise transfer function according to the state of the art.

Fig. 4 schematically shows a diagram with poles and zeros of a noise transfer function according to the state of the art.

Fig. 5 schematically shows an output spectrum of a transmitter with noise transfer function according to the state of the art.

Fig. 6 schematically shows an output spectrum of a transmitter with an improved noise transfer function according to the invention.

Fig. 7 schematically shows noise figures for a transmitter with a noise transfer function according to the invention.

Fig. 8 schematically shows diagrams with poles and zeros of a noise transfer function according to the invention.

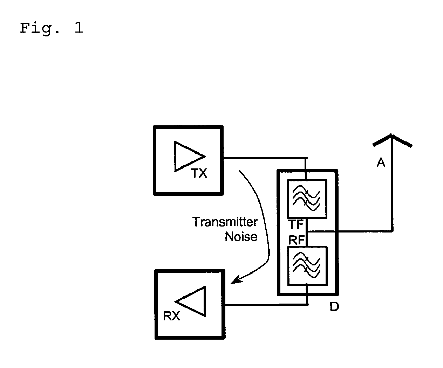

The principle structure of a radio frequency system for signal transmission and reception according to the state of the art is shown in fig. 1.

A transmitter TX is connected to a transmission filter TF that is tuned to a transmission band of a duplexer D, and a receiver RX is connected to a reception filter RF that is tuned to a reception band of said duplexer D.

The transmitter TX comprises a signal input, and the receiver RX comprises a signal output, which are both not shown in fig. 1.

The duplexer D is connected to an antenna A.

The transmitter TX in fig. 1 shall use switch mode amplifiers, like e.g. class S amplifiers, which leads to a high noise power due to the fact that a class S amplifier is driven by a digital data stream generated by a delta sigma modulator whose output typically has low resolution of often even only 1 bit. Thus, large quantization noise is generated.

The problem now is that the transmitter's noise may also be present around receive frequencies. This means the duplexer D needs a high rejection in its transmission part to avoid that noise from the transmitter TX leaks into the receiver RX and desensitizes it.

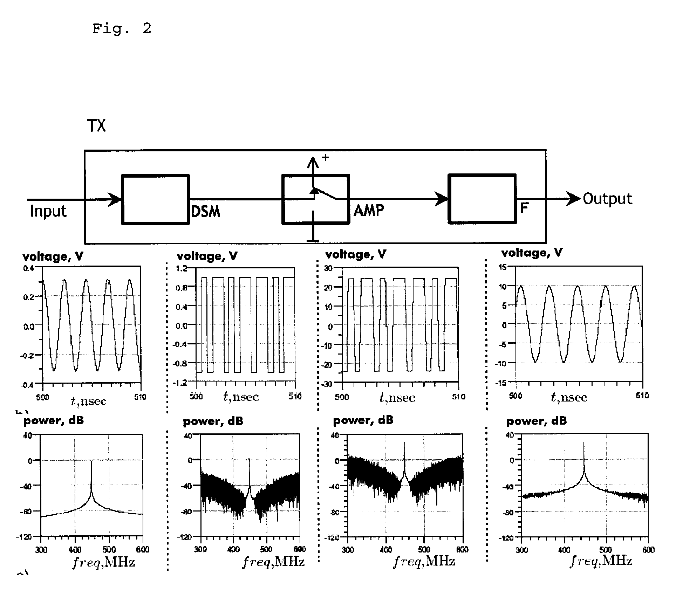

Fig. 2 is illustrating in the upper row the transmitter TX that comprises a delta sigma modulator DSM, an amplifier AMP, and a filter F.

The delta sigma modulator DSM has an input for receiving input signals. The output of the delta sigma modulator DSM is connected to the input of the amplifier AMP.

The output of the amplifier AMP is connected to the input of the filter F, and the filter F comprises an output for transmitting output signals.

In the middle row, 4 diagrams are showing the signal voltage in volts versus time in nanoseconds from left to right for signals at the input of the delta sigma modulator DSM, at the output of the delta sigma modulator DSM, at the output of the amplifier AMP, and at the output of the filter F.

In the lower row, 4 diagrams are showing the signal power density spectrum in decibels versus frequency in megahertz from left to right for signals at the input of the delta sigma modulator DSM, at the output of the delta sigma modulator DSM, at the output of the amplifier AMP, and at the output of the filter F.

If the first and the second diagram in the lower row are compared, it can be seen that a high amount of quantization noise is created in the delta sigma modulator DSM. Even after filtering of the signal a fairly high amount of noise remains which can leak into the receiver RX and can desensitize it, as can be seen in the last diagram in the lower row.

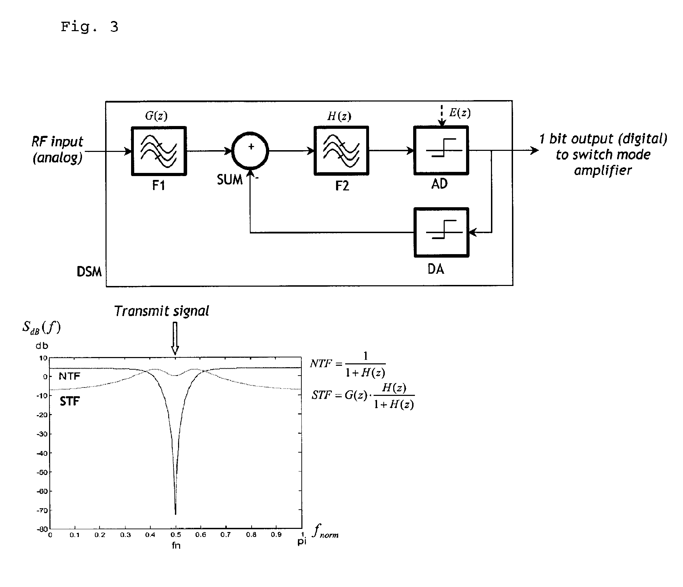

Fig. 3 is illustrating the delta sigma modulator DSM, and in a diagram the corresponding signal transfer function STF and noise transfer function NTF according to the state of the art. The delta sigma modulator DSM comprises a filter F1, a summer SUM, a noise shaping filter F2, an analog-to-digital converter AD and a digital-to-analog converter DA.

The filter F1 has an input for receiving analog input signals. The output of the filter F1 is connected to a first input of the summer SUM.

The output of the summer SUM is connected to the input of the noise shaping filter F2, and the output of the noise shaping filter F2 is connected to the input of the analog-to-digital converter AD.

The output of the analog-to-digital converter AD is on the one hand connected to the input of the digital-to-analog converter DA, and can on the other hand be connected to an external device, as e.g. the amplifier AMP, for transmitting digital output signals.

The output of the digital-to-analog converter DA is connected to a second input of the summer SUM.

In principle, an analog RF input signal is encoded in the delta sigma modulator DSM into a two level digital output sequence that is appropriate for driving a switch mode amplifier.

The signal transfer function STF, which is dependent on the filtering function G(z) of the filter F1 and the filtering function H(z) of the noise shaping filter F2, determines the bandwidth of the delta sigma modulator DSM and thus also the bandwidth of the amplifier AMP. The signal transfer function STF can be calculated according to the following formula:

$$STF = G(z) \cdot \frac{H(z)}{1 + H(z)}$$

The noise shaping filter F2 is responsible for creating a noise notch around the signal of interest i.e. the transmit signal. The noise generated by the delta sigma modulator DSM is colored, i.e. not uniform along the frequency axis. The shape of the noise is described by the so-called noise transfer function NTF.

The noise transfer function NTF, which is dependent on the filtering function H(z) of the noise shaping filter F2, determines the spectral shaping of the quantization noise E(z). The noise transfer function NTF can be calculated according to the following formula:

$$NTF = \frac{1}{1 + H(z)}$$

In the diagram in fig. 3, the signal transfer function STF and the noise transfer function NTF are depicted in decibels over the normalized frequency. It can be seen that the noise transfer function NTF has a notch around the frequency of the transmit signal at the normalized frequency f=0.5.

As an example for a noise transfer function NTF, the following function NTF(z) is used with the digits of the coefficients being shortened for the sake of simplicity:

$$NTF(z) = \frac{0.63274(z^2 + 0.1349z + 1)(z^2 - 0.1349z + 1)(z^2 - 0.056z + 1)(z^2 + 0.056z + 1)}{(z^2 - 0.127z + 0.7213)(z^2 + 0.127z + 0.7213)(z^2 - 0.3266z + 0.8772)(z^2 + 0.3266z + 0.8772)}$$

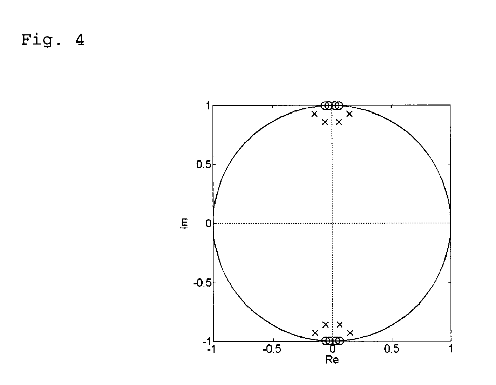

The noise transfer function NTF is determined by the distribution of poles and zeros. In fig. 4, the complex poles are depicted as crosses, and the complex zeros are depicted as circles for the function NTF(z) above.

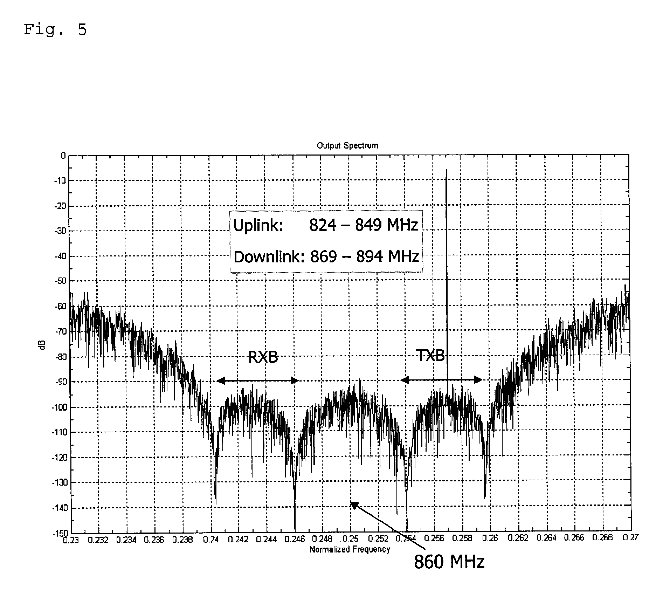

In fig. 5, an output spectrum of the transmitter TX in which the noise transfer function NTF(z) above is implemented is depicted in decibels full scale over the normalized frequency. It can be seen, that the noise in the receive band RXB, i.e. in uplink, between 824 MHz and 849 MHz and in the transmit band TXB, i.e. in downlink, between 869 MHz and 894 MHz of the corresponding radio frequency system has equal strength.

As already mentioned above, when considering noise in an RF system it can be concluded that noise around receive frequencies is much more problematic than noise around transmit frequencies. Noise around receive frequencies is problematic as it can desensitize the receiver and by that could reduce cell radius when used in the base station of a cellular mobile communication system. Noise around transmit signals can be tolerated much higher, as when looking at typical air interface standards e.g. for UMTS the standard allows for significant noise.

According to the invention, an asymmetric noise shaping where the noise around receive frequencies is much lower than around transmit frequencies is proposed in order to avoid desensitization of the receiver. Said asymmetric noise shaping can be achieved by an asymmetric arrangement of the pole-zero distribution of an improved noise transfer function NTF(z) in the noise shaping filter F2. The poles and zeros of the improved noise transfer function NTF(z) are distributed in such a way, that the noise in the receive band RXB is reduced while still keeping a moderate noise notching in the transmission band TXB.

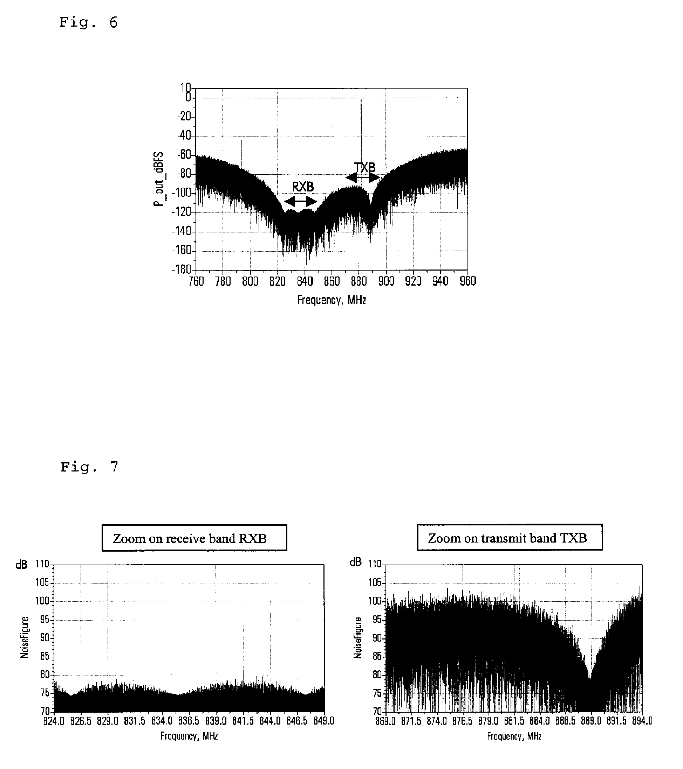

In fig. 6, an output spectrum of the transmitter TX in which the improved noise transfer function NTF(z) according to the invention is implemented is depicted in decibels full scale over the normalized frequency. It can be seen, that the noise in the receive band RXB is much lower than the noise in the transmit band TXB.

In the left diagram in fig. 7, the noise figure in the receive band RXB with the improved noise transfer function NTF(z) is depicted in decibels over the normalized frequency. The noise figure in the receive band RXB is around 75 dB to 80 dB. This means that in an embodiment of the invention depending on the system requirements, a duplexer D with a transmission filter with roughly 90 dB rejection of frequencies in the receive band RXB in its transmission branch is needed. For comparison, base stations nowadays are typically equipped with class AB amplifiers having noise figures in the area of 40 dB. However due to other spurious emissions they also need duplexers with around 80 or 90 dB rejection.

In the right diagram in fig. 7, the noise figure in the transmit band TXB of the transmitter TX with an improved noise transfer function NTF(z) is depicted in decibels over the normalized frequency. The noise figure in the transmit band TXB is around 100 dB which is still sufficient for transmission.

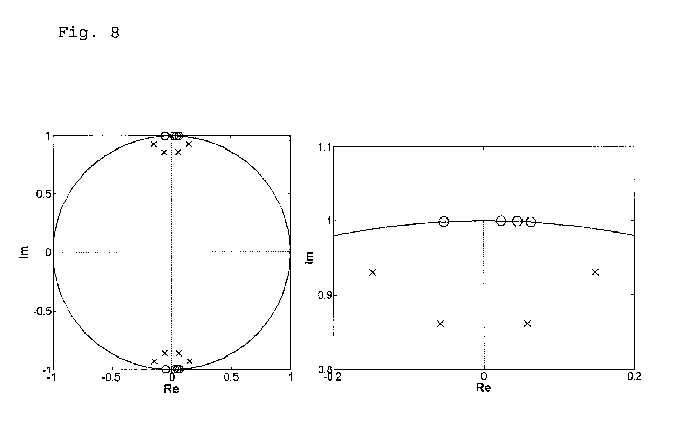

In fig. 8 two diagrams related to an example for an improved pole zero distribution that is used for the improved noise transfer function NTF(z) are depicted.

In the left diagram of fig. 8, the complex poles for the improved noise transfer function NTF(z) are depicted as crosses, and the complex zeros for the improved noise transfer function NTF(z) are depicted as circles.

In the right diagram of fig. 8, it can be seen from the zoom that the distribution of poles and zeros is not symmetric with respect to the imaginary axis. This asymmetry leads to the reduced noise in the receive band RXB while still keeping a moderate noise notching in the transmit band TXB as shown in figs. 6 and 7.

An improved noise shaping filter F2 with an improved noise transfer function NTF(z) with an asymmetric noise shaping characteristic with the noise in a first frequency band being lower than the noise in a second frequency band can be comprised in a digital signal modulator DSM of an improved transmitter TX.

The digital signal modulator DSM can be implemented e.g. in a DSP (DSP = digital signal processor) or in an FPGA (FPGA = field programmable gate array).

An improved radio frequency system for signal transmission and reception comprises said improved transmitter TX that is connected to a receiver RX, and said transmitter TX and receiver RX in turn being connected to at least one common antenna A.

In an embodiment of the invention, a transmission filter TF with a passband that is tuned to the frequency band used for transmission is in the transmission path of the improved radio frequency system for signal transmission and reception.

In another embodiment of the invention, a reception filter RF with a passband that is tuned to the frequency band used for reception is in the reception path of the improved radio frequency system for signal transmission and reception.

In an embodiment of the invention, said improved radio frequency system is comprised in a base station for radio transmission or in a mobile station for radio transmission that is part of a communication network.

### Claims

1. A method for signal transmission and reception using a transmitter (TX) comprising a delta sigma modulator (DSM) with a noise shaping filter (F2) and a power amplifier (AMP), said transmitter (TX) being connected to a receiver (RX) **characterized in, that** an asymmetric noise shaping is performed in the noise shaping filter (F2) with the noise in a first frequency band used for reception being lower than in a second frequency band used for transmission.

2. A transmitter (TX) for transmission of radio frequency signals comprising a delta sigma modulator (DSM) with a noise shaping filter (F2) and comprising a power amplifier (AMP) **characterized in, that** the noise shaping filter (F2) has an asymmetric noise shaping characteristic with the noise in a first frequency band being lower than the noise in a second frequency band.

3. A transmitter (TX) according to claim 2, **characterized in, that** the delta sigma modulator (DSM) is implemented in a field programmable gate array.

4. A radio frequency system with a transmitter (TX) comprising a delta sigma modulator (DSM) with a noise shaping filter (F2) and comprising a power amplifier (AMP), said transmitter (TX) being connected to a receiver (RX), and said transmitter (TX) and receiver (RX) being connected to at least one common antenna (A) **characterized in, that** the noise shaping filter (F2) has an asymmetric noise shaping characteristic with the noise in a first frequency band being lower than the noise in a second frequency band.

5. A radio frequency system according to claim 3, **characterized in, that** a transmission filter (TF) with a passband that is tuned to the frequency band used for transmission is in the transmission path.

6. A radio frequency system according to claim 3, **characterized in, that** a reception filter (RF) with a passband that is tuned to the frequency band used for reception is in the reception path.

7. A base station for radio transmission comprising at least one radio frequency system with a transmitter (TX) comprising a delta sigma modulator (DSM) with a noise shaping filter (F2) and comprising a power amplifier (AMP), said transmitter (TX) being connected to a receiver (RX), and said transmitter (TX) and receiver (RX) being connected to at least one common antenna (A) **characterized in, that** the noise shaping filter (F2) has an asymmetric noise shaping characteristic with the noise in a first frequency band being lower than the noise in a second frequency band.

8. A mobile station for radio transmission comprising at least one radio frequency system with a transmitter (TX) comprising a delta sigma modulator (DSM) with a noise shaping filter (F2) and comprising a power amplifier (AMP), said transmitter (TX) being connected to a receiver (RX), and said transmitter (TX) and receiver (RX) being connected to at least one common antenna (A) **characterized in, that** the noise shaping filter (F2) has an asymmetric noise shaping characteristic with the noise in a first frequency band being lower than the noise in a second frequency band.

9. A communication network comprising at least one base station or one mobile station for radio transmission that comprises at least one radio frequency system with a transmitter (TX) comprising a delta sigma modulator (DSM) with a noise shaping filter (F2) and comprising a power amplifier (AMP), said transmitter (TX) being connected to a receiver (RX), and said transmitter (TX) and receiver (RX) being connected to at least one common antenna (A) **characterized in, that** the noise shaping filter (F2) has an asymmetric noise shaping characteristic with the noise in a first frequency band being lower than the noise in a second frequency band.

Fig. 1

Fig. 2

Fig. 3

$$NTF = \frac{1}{1+H(z)}$$

$$STF = G(z) \cdot \frac{H(z)}{1+H(z)}$$

Fig. 4

Fig. 5

Fig. 6

Fig. 7

Zoom on receive band RXB

Zoom on transmit band TXB

Fig. 8

Europäisches
Patentamt

European
Patent Office

Office européen
des brevets

**EUROPEAN SEARCH REPORT**

Application Number

EP 08 15 8910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/217082 A1 (FISCHER GEORG [DE]) 28 September 2006 (2006-09-28) * abstract * * paragraph [0008] - paragraph [0049] * * figures 3-7 * ----- | 1-9 | INV. H04B1/04 |
| X | US 2005/265481 A1 (BELLAOUAR ABDELLATIF [US] ET AL) 1 December 2005 (2005-12-01) * abstract * * paragraph [0006] - paragraph [0093] * * figures 2-12 * ----- | 1-9 | |

TECHNICAL FIELDS
SEARCHED       (IPC)

H04B

The present search report has been drawn up for all claims

| Place of search | Date of completion of the search | Examiner |
|---|---|---|
| The Hague | 3 December 2008 | Tzimeas, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                EP 08 15 8910

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2008

| Patent document cited in search report | | Publication date | Patent family member(s) | | Publication date |
|---|---|---|---|---|---|
| US 2006217082 | A1 | 28-09-2006 | NONE | | |
| US 2005265481 | A1 | 01-12-2005 | CN | 1957575 A | 02-05-2007 |
| | | | EP | 1754356 A2 | 21-02-2007 |
| | | | JP | 2008509575 T | 27-03-2008 |
| | | | WO | 2005120001 A2 | 15-12-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11327838 B